# EUROPÄISCHE PATENTANMELDUNG

(11) **EP 0 637 554 A1**
(43) Veröffentlichungstag der Anmeldung: **08.02.1995**
(21) Anmeldenummer: 94110318.6
(22) Anmeldetag: 02.07.1994
(51) Int. Cl.: B65D 90/50

(54) **Auf Undichtigkeiten überprüfbare Auskleidungen auf der Basis von Gummi**

(30) Priorität: 04.08.1993 DE 9311620 U
(71) Anmelder: SIGRI GREAT LAKES CARBON GmbH, D-65203 Wiesbaden (DE)
(72) Erfinder: Huber, Johann, D-84558 Kirchweidach (DE); Schmitz, Alfred, D-84508 Burgkirchen (DE); Wanke, Kurt, D-84508 Burgkirchen (DE)

(57) **Zusammenfassung**

Eine Auskleidung aus Gummi (2), z.B. eine Behälterauskleidung, besteht aus mindestens zwei Gummischichten (5, 6, 7), von denen die produktseitige Schicht (7) elektrisch nichtleitend und die auf diese Schicht folgende Schicht (6) elektrisch leitend ausgebildet ist. Schäden in der Gummierung werden durch Schließen eines Stromkreises erkannt. Durch Unterteilung der elektrisch leitenden Schicht (6) in einzelne Bereiche oder Segmente kann die Schadenszone lokalisiert werden.

## Beschreibung

Es ist bekannt, Einrichtungen wie Behälter, Kessel, Abwasseraufbereitungsanlagen, Lagerbecken, Kolonnen, Rohre und dergleichen mit einer Auskleidung auf der Basis von thermoplastischen Kunststoffen oder Gummi zu versehen. Da die Auskleidung aus Teilstücken zusammengesetzt ist, treten immer wieder Undichtigkeiten an den geschweißten oder geklebten Nähten auf, die dann zum Beispiel zur korrosiven Zerstörung der Behälterwand führen. Um solche Undichtigkeiten überprüfen und lokalisieren zu können, ist es bereits bekannt, zwischen Auskleidung und Behälterwand eine die Nähte der Auskleidung abdeckende Schicht aus elektrisch leitfähigem Material anzuordnen, die einen elektrischen Kontakt mit Anschluß für ein Widerstandsmeßgerät und eine Elektrode aufweist.

Es wurde nun eine einfachere Ausgestaltung von Auskleidungen auf der Basis von Gummi gefunden, womit eventuelle Undichtigkeiten sofort erkannt, ständig überprüft und genau lokalisiert werden können.

Die erfindungsgemäße Auskleidung enthält eine Gummischicht, die elektrisch leitfähig ausgebildet ist. Eine bevorzugte Auskleidung besteht aus einer elektrisch leitfähigen Gummischicht als Unterlage und einer darauf applizierten, gegenüber dem Medium beständigen zweiten Gummischicht. Nach einer weiteren bevorzugten Ausführungsform besteht die Auskleidung aus drei Gummischichten, wobei die mittlere Gummischicht elektrisch leitfähig ist. Die Unterkonstruktion, worauf die erfindungsgemäße Auskleidung aufgebracht ist, kann aus den üblichen Materialien und Werkstoffen aufgebaut sein. Im allgemeinen handelt es sich um Schwarzstahl, Weißstahl, Beton und glasfaserverstärkte Kunststoffe (GFK).

Nachstehend wird das neue Leckage-Meldesystem im Oberflächenschutz anhand eines Beispiels näher beschrieben, wobei von einem Stahlbehälter ausgegangen wird. Auf eine beständige, 3 mm dicke, elektrisch nicht leitende Gummierung als erste Schicht wird eine 2 mm dicke, elektrisch leitfähige Gummibahn (Durchgangswiderstand < 10³ Ω) appliziert und mit Litzen versehen, die zu einem Anzeige- und Meldegerät führen. Die Unterteilung der Prüfflächen kann beliebig angeordnet sein (nach Erfahrungen bezüglich eventueller Schwachstellen). Als Deckschicht dient eine 4 mm dicke Gummiauskleidung, die gegen das Medium beständig ist. Sollte diese mediumseitige Schutzschicht durch Beschädigung, Erosion oder Verschleiß undicht oder abgetragen werden, so erhält die leitfähige Alarmschicht Kontakt mit dem Medium und gibt Alarm. Nachdem unter der Alarmschicht ein weiterer Oberflächenschutz vorhanden ist, kann die Fehlstelle durch Unterteilung der Prüffläche lokalisiert und gelegentlich repariert werden. Ferner kann eine Fehlstelle auch in der Gummischicht zwischen der Alarmschicht und zum Beispiel der Stahlwand überprüft und lokalisiert werden, indem der Mediemkontakt zum Stahl geschlossen wird. Zur Erreichung der Leitfähigkeit enthält die Gummischicht vorzugsweise Graphit.

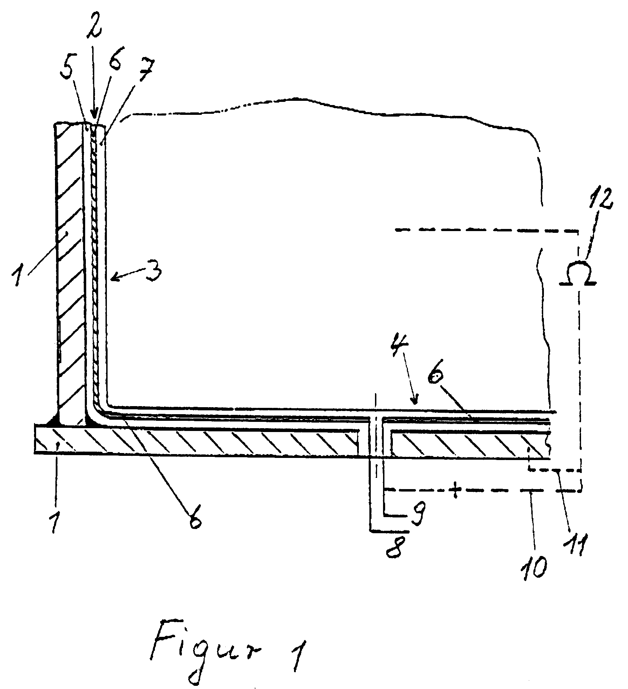

Die Erfindung wird nun anhand von beispielhaften Ausführungsformen, dargestellt in einer Zeichnung mit den Figuren 1, 2 und 3, noch näher erläutert, wobei jede Figur in Form einer schematischen Schnittansicht gestaltet ist.

Fig. 1 zeigt einen Behälter mit einer Stahlwand 1, die mit einem Gummiüberzug 2 versehen ist. Der Gummiüberzug 2, unterteilt in die Prüfflächen 3 und 4, besteht aus drei Gummischichten 5, 6 und 7, wobei die mittlere Schicht 6 durch inkorporierten Graphit leitfähig ist. Es ist soviel Graphit eingearbeitet, daß der Durchgangswiderstand < 10³ Ω ist. Die elektrischen Leitungen 8, 9, die von der mittleren Gummischicht 6 ausgehen, führen durch die Behälterwand 1 zu einem nicht dargestellten Alarmgerät. Die elektrische Leitung 10 stellt die Verbindung von der leitfähigen Gummischicht 6 mit dem Medium im Behälter dar und mit den Leitungen 10, 11 sind Behälterwand 1 und Behälterinhalt verbunden, in beiden Fällen über ein Ohmmeter 12.

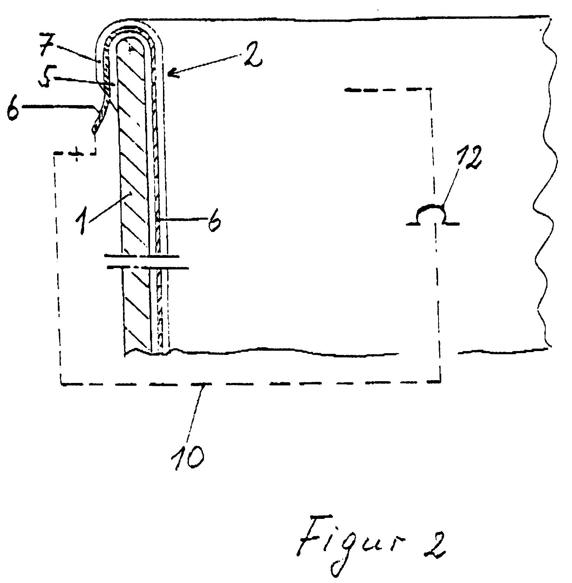

In Figur 2 wird gezeigt, wie die Führung des elektrischen Anschlusses, ausgehend von der leitfähigen Gummischicht 6, nach außen gelegt werden kann. Dies erfolgt in der Weise, daß der Gummiüberzug 2 über die Behälterwand 1 nach außen geführt wird und die Elektroleitung 10 an der gegebenenfalls noch weiter geführten leitfähigen Schicht 6 angeschlossen werden kann.

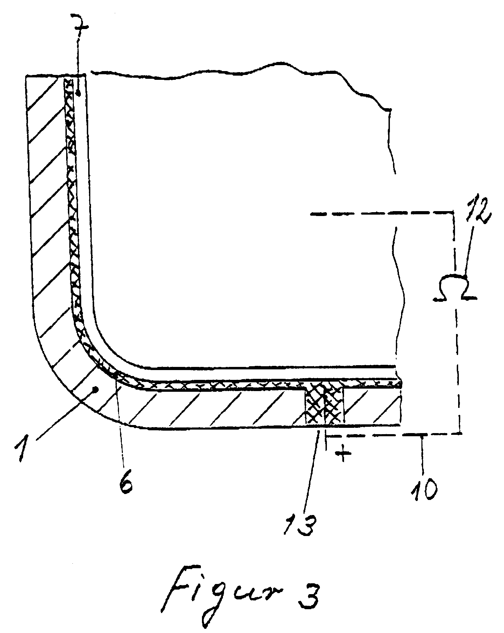

Figur 3 zeigt einen Behälter aus GFK mit zwei Gummischichten 6, 7, wobei die erste am GFK applizierte Schicht 6 elektrisch leitfähig und die zweite Schicht 7 gegenüber dem Medium haltbar ausgebildet ist. Mit dieser Variante wird zusätzlich erreicht, daß die mediembeständige Schicht 7, auch wenn die Auskleidung zum Beispiel auf GFK oder Beton appliziert ist, auf elektrische Durchschlagfestigkeit und Dichtigkeit geprüft werden kann.

Die leitfähige Gummischicht 6 geht an der Anschlußstelle 13 für die Elektroleitungen in die Behälterwand 1 hinein, wobei mit der Leitung 10, die über ein Ohmmeter 12 führt, wiederum die Verbindung zum Behälterinhalt hergestellt wird.

## Patentansprüche

1. Auf Undichtigkeiten überprüfbare Auskleidungen auf der Basis von Gummi,
dadurch gekennzeichnet, daß
die Auskleidung eine elektrisch leitfähige Gummischicht (6) enthält.

2. Auskleidung nach Patentanspruch 1,
dadurch gekennzeichnet, daß
sie aus zwei Gummischichten (6, 7) besteht, wobei die erste auf dem auszukleidenden Gegenstand befindliche Schicht (6) elektrisch leitfähig ausgebildet ist.

3. Auskleidung nach Patentanspruch 1,
dadurch gekennzeichnet, daß sie aus drei Gummischichten (5, 6, 7) besteht, wobei die mittlere Schicht (6) elektrisch leitfähig ausgebildet ist.

4. Auskleidungen nach einem der Patentansprüche 1 bis 3, dadurch gekennzeichnet, daß
die leitfähige Gummischicht (6) Graphit als elektrisch leitende Komponente enthält.
